# EUROPÄISCHE PATENTSCHRIFT

(11) **EP 3 825 528 B1**
(45) Veröffentlichungstag und Bekanntmachung des Hinweises auf die Patenterteilung: **01.02.2023**
(21) Anmeldenummer: 20202676.1
(22) Anmeldetag: 20.10.2020
(51) Int. Cl.: F01N 3/20

(54) **ABGASHEIZER**
EXHAUST HEATER
CHAUFFAGE DE GAZ D'ÉCHAPPEMENT

(30) Priorität: 22.11.2019 DE 102019131556
(43) Veröffentlichungstag der Anmeldung: 26.05.2021
(73) Patentinhaber: Purem GmbH, 66539 Neunkirchen (DE)
(72) Erfinder: Kurpejovic, Enver, 73230 Kirchheim unter Teck (DE); Solipuram, Vijaya Bhaskar, 73730 Esslingen (DE); Uysal, Fatih, 73207 Plochingen (DE)
(74) Vertreter: Ruttensperger Lachnit Trossin Gomoll

(56) Entgegenhaltungen:
- EP-B1- 2 935 996
- CN-A- 109 973 182
- DE-A1-102005 011 657

## Beschreibung

Die vorliegende Erfindung betrifft einen Abgasheizer für eine Abgasanlage einer Brennkraftmaschine, welcher insbesondere dazu genutzt werden kann, das auf eine Katalysatoreinheit zu strömende Abgas zu erwärmen.

Aus der EP 2 935 996 B1 ist ein Abgasheizer bekannt, bei welchem ein an einer rohrartigen Abgasführungskomponente festgelegter Träger derart geformt ist, dass ein an diesem Träger getragener, spiralartig gewundener Heizleiter in einer zu einer Abgasströmungsrichtung im Wesentlichen orthogonalen Ebene orientiert angeordnet ist.

Die Druckschrift CN 109 973 182 A offenbart den Gegenstand des Oberbegriffs des Anspruchs 1.

Es ist die Aufgabe der vorliegenden Erfindung, einen Abgasheizer bereitzustellen, der so ausgestaltet ist, dass dieser bei erhöhter Festigkeit ein verbessertes Heizverhalten aufweist.

Diese Aufgabe wird erfindungsgemäß durch einen Abgasheizer nach Anspruch 1 und eine Abgasanlage nach Anspruch 13 gelöst. In den Unteransprüchen sind bevorzugte Ausführungsformen der Erfindung beschrieben.

Erfindungsgemäß wird diese Aufgabe insbesondere gelöst durch einen Abgasheizer für eine Abgasanlage einer Brennkraftmaschine, umfassend:
- einen Träger mit einem bezüglich einer Heizer-Längsachse radial außen angeordneten Außenumfangsbereich und einem Zentralbereich,
- einen an dem Träger getragenen Heizleiter,
wobei der Heizleiter einen an einer ersten axialen Seite des Trägers angeordneten, spiralartig gewundenen Heizabschnitt umfasst.

Dieser Abgasheizer zeichnet sich dadurch aus, dass der Zentralbereich bezüglich des Außenumfangsbereichs in Richtung der ersten axialen Seite des Trägers axial versetzt angeordnet ist derart, dass ein im Bereich des Außenumfangsbereichs des Trägers liegender radial äußerer Endabschnitt des Heizabschnitts und ein im Bereich des Zentralbereichs des Trägers liegender radial innerer Endabschnitt des Heizabschnitts zueinander axial versetzt angeordnet sind.

Bei dem erfindungsgemäß aufgebauten Abgasheizer weisen sowohl der Träger, als auch der an dem Träger getragene Heizabschnitts des Heizleiters eine in ihrer Erstreckung von radial außen nach radial innen axial ausgedehnte Struktur auf. Durch diese axial ausgedehnte Windungsstruktur des Heizleiters wird bezüglich der im Stand der Technik bekannten Struktur, bei welcher der Heizabschnitt des Heizleiters im Wesentlichen in einer Ebene liegt, bei gleicher Windungsanzahl eine größere Erstreckungslänge und somit eine stärkere thermische Wechselwirkung des Heizleiters mit dem diesen umströmenden Abgas erreicht. Die axial ausgedehnte Struktur des Trägers macht diesen im Vergleich zu einem im Wesentlichen in einer Ebene liegenden Träger insbesondere in Axialrichtung steifer und führt somit zu einer erhöhten Eigenfrequenz des Trägers. Die Gefahr, dass aufgrund von in einer Abgasanlage unvermeidbar auftretenden Vibrationen über die Betriebslebensdauer hinweg durch Schwingungsanregungen eine möglicherweise zu einem Schaden führende Ermüdung des Trägers auftritt, kann somit deutlich gemindert werden.

Zum Bereitstellen dieser axial ausgedehnten Struktur kann der Träger einen zwischen dem Außenumfangsbereich und dem Zentralbereich sich erstreckenden und im Wesentlichen den Heizabschnitt tragenden Tragebereich mit im Wesentlichen konischer Form umfassen. Es ist darauf hinzuweisen, dass im Sinne der vorliegenden Erfindung eine derartige konische bzw. trichterartige Form beispielsweise und bevorzugt dadurch bereitgestellt werden kann, dass der Tragebereich in seiner Erstreckung von radial außen nach radial innen einen im Wesentlichen ungekrümmten Verlauf aufweist. Eine derartige Form kann jedoch auch mit einem beispielsweise in der Form einer Parabel oder einer Hyperbel gekrümmten Verlauf des Tragebereichs erreicht werden.

Zum Mindern des durch den Träger eingeführten Strömungswiderstands kann der Zentralbereich in Richtung der ersten axialen Seite konvex ausgewölbt sein.

Um den Abgasheizer gegen aggressive Bestandteile des diesen durchströmenden Abgases und eine starke thermische Belastung resistent zu gestalten, wird vorgeschlagen, dass der Träger als Metallbauteil, vorzugsweise Blechformteil, ausgebildet ist.

Um einen elektrischen Kurzschluss im Bereich des Abgasheizers zu vermeiden, kann der Heizleiter in seinem den Träger überdeckenden Längenbereich elektrisch isoliert sein.

Bei einer alternativen Ausgestaltung, welche zu einer weiter verbesserten thermischen Wechselwirkung des Heizleiters mit dem diesen umströmenden Abgas führt, kann der Heizleiter in seinem den Träger überdeckenden Längenbereich im Wesentlichen nicht elektrisch isoliert sein, wobei an dem Heizleiter eine Mehrzahl von diesen umgebenden und an dem Träger festgelegten oder/und sich abstützenden Isolierelementen vorgesehen ist. Somit wird nur in den Bereichen, in welchen zum Erzeugen einer Haltewirkung bzw. Abstützwirkung ein Kontakt mit dem Heizleiter nicht zu vermeiden ist, dieser durch das Vorsehen der Isolierelemente isoliert und somit auch gegen einen direkten Kontakt mit dem Abgasstrom abgeschirmt. Eine derartige Ausgestaltung des Heizleiters kann sowohl bei der axial ausgedehnten, beispielsweise konischen Ausgestaltung des Trägers und dabei axial zueinander versetzten äußeren und inneren Endabschnitten des Heizabschnitts Anwendung finden, als auch bei einem Träger, der zum Beispiel im Wesentlichen orthogonal zur Heizer-Längsachse einen ebenen, im wesentlichen ungekrümmten Zentralbereich aufweist, so dass auch die radial äußeren und inneren Endabschnitte des Heizabschnitts im Wesentlichen nicht zueinander axial versetzt liegen.

Um eine Verbindung zwischen dem Außenumfangsbereich und dem Zentralbereich bei sichergestellter Durchströmbarkeit des Trägers bereitzustellen, umfasst erfindungsgemäß der Träger eine Mehrzahl von mit Umfangsabstand zueinander angeordneten und den Zentralbereich mit dem Außenumfangsbereich verbindenden Verbindungsstegen, wobei zwischen in Umfangsrichtung einander unmittelbar benachbarten Verbindungsstegen Durchströmöffnungen gebildet sind.

Dabei können die in Umfangsrichtung aufeinanderfolgenden Durchströmöffnungen eine Mehrzahl von radial gestaffelt angeordneten Öffnungs-Ringstrukturen bereitstellen. Aufgrund der Spiralstruktur des Heizabschnitts führt eine derartige Ringstruktur der Durchströmöffnungen dazu, dass Bereiche der Durchströmöffnungen existieren, in welchen diese vom Heizabschnitts überdeckt sind, und Bereiche der Durchströmöffnungen existieren, in welchen diese vom Heizabschnitts nicht überdeckt sind. Es kann somit eine ausgewogene Struktur hinsichtlich eines möglichst geringen Strömungswiderstand einerseits und eines möglichst geringen Eintrags von Wärme in den Träger andererseits erreicht werden.

Bei einer alternativen Ausgestaltungsart wird vorgeschlagen, dass in Umfangsrichtung aufeinanderfolgende Durchströmöffnungen eine Öffnungs-Spiralstruktur bereitstellen.

Dabei kann ein spiralartiger Verlauf der Öffnungs-Spiralstruktur im Wesentlichen einem spiralartigen Verlauf des Heizabschnitts entsprechen, und der Heizabschnitt kann bezüglich der Öffnungs-Spiralstruktur derart angeordnet sein, dass der Heizabschnitt die Durchströmöffnungen der Öffnungs-Spiralstruktur im Wesentlichen überdeckend angeordnet ist. Bei dieser Ausgestaltung ist also dafür gesorgt, dass eine möglichst geringe thermische Wechselwirkung zwischen dem Heizabschnitts und dem Träger entsteht, so dass thermische Verluste über den Träger minimiert werden können.

Bei einer alternativen Ausgestaltungsart wird vorgeschlagen, dass ein spiralartiger Verlauf der Öffnungs-Spiralstruktur im Wesentlichen einem spiralartigen Verlauf des Heizabschnitts entspricht, und dass der Heizabschnitt bezüglich der Öffnungs-Spiralstruktur derart angeordnet ist, dass der Heizabschnitt die Durchströmöffnungen der Öffnungs-Spiralstruktur im Wesentlichen nicht überdeckend angeordnet ist. Bei dieser Ausgestaltung ist einer guten Durchströmbarkeit der Durchströmöffnungen Präferenz gegeben, so dass der durch den Abgasheizer eingeführte Strömungswiderstand minimiert werden kann.

Zum Anschluss des Heizleiters mit zwei Anschlussbereichen desselben an eine Spannungsquelle wird vorgeschlagen, dass der Heizleiter einen an den radial inneren Endabschnitt des Heizabschnitts anschließenden Verbindungsabschnitt umfasst, wobei der Verbindungsabschnitt an einer zweiten axialen Seite des Trägers von radial innen nach radial außen entlang eines Verbindungsstegs geführt ist. Durch das Führen des Verbindungsabschnitts entlang des Verbindungsstegs wird eine durch den Verbindungsabschnitt eingeführte Beeinträchtigung der Durchströmbarkeit des Abgasheizers vermieden.

Dabei kann für eine stabile Halterung des Heizleiters am Träger dadurch gesorgt werden, dass im Bereich der Verbindungsstege an dem Heizleiter von radial außen nach radial innen verlaufend angeordnete erste Gruppen von Isolierelementen vorgesehen sind, wobei die Isolierelemente der ersten Gruppen von Isolierelementen im Bereich der Verbindungsstege sich erstreckende Abschnitte des Heizabschnitts umgeben.

Eine noch weiter verbesserte Haltewirkung bzw. Abstützwirkung wird erreicht, wenn zwischen wenigstens zwei in Umfangsrichtung unmittelbar aufeinanderfolgenden ersten Gruppen von Isolierelementen wenigstens eine von radial außen nach radial innen verlaufend angeordnete zweite Gruppe von Isolierelementen vorgesehen ist, wobei die Isolierelemente der zweiten Gruppe von Isolierelementen im Bereich zwischen zwei Verbindungsstegen sich erstreckende Abschnitte des Heizabschnitts umgeben.

Zur Festlegung des Heizleiters am Träger kann der Heizabschnitt durch eine Mehrzahl von diesen übergreifenden und am Träger festgelegten, vorzugsweise kammartigen Halteelementen am Träger gehalten ist.

Insbesondere bei im Wesentlichen nicht elektrisch isolierter Ausgestaltung des Heizleiters ist es dabei vorteilhaft, wenn der Heizabschnitts im Bereich wenigstens einer, vorzugsweise jeder ersten Gruppe von Isolierelementen vermittels eines Halteelements am Träger gehalten ist.

Am Außenumfangsbereich des Trägers kann eine Mehrzahl von in axialer Richtung abgebogenen Befestigungsabschnitten zur Festlegung des Trägers an einer Abgasführungskomponente vorgesehen sein.

Dabei kann eine axialen Bauraum sparende Ausgestaltung dadurch gewährleistet werden, dass wenigstens ein Teil der, vorzugsweise alle Befestigungsabschnitte in Richtung zur ersten axialen Seite abgebogen sind.

Die vorliegende Erfindung betrifft ferner eine Abgasanlage, umfassend eine vorzugsweise rohrartige Abgasführungskomponente und einen in der Abgasführungskomponente angeordneten, erfindungsgemäß aufgebauten Abgasheizer.

Dabei kann der Abgasheizer beispielsweise mit seiner Heizer-Längsachse sich im Wesentlichen in Richtung einer Abgas-Hauptströmungsrichtung erstreckend derart in der Abgasführungskomponente angeordnet sein, dass der Träger mit seiner ersten axialen Seite in Richtung stromaufwärts orientiert ist derart, dass der im Bereich des Zentralbereichs des Trägers liegende radial innere Endabschnitt des Heizabschnitts stromaufwärts bezüglich des im Bereich des Außenumfangsbereichs des Trägers liegenden radial äußeren Endabschnitt des Heizabschnitts positioniert ist oder/und dass der Heizabschnitt an seiner in Richtung stromaufwärts orientierten Seite nicht durch den Träger überdeckt ist.

Um die durch den Heizleiter in das Abgas eingetragene Wärme effizient nutzen zu können, wird vorgeschlagen, dass der Abgasheizer stromaufwärts bezüglich einer in der Abgasführungskomponente angeordneten Abgasbehandlungseinheit, vorzugsweise Katalysatoreinheit, angeordnet ist.

Die vorliegende Erfindung wird nachfolgend mit Bezug auf die beiliegenden Figuren detailliert beschrieben. Es zeigt:
- Fig. 1: eine perspektivische Ansicht eines Teils einer Abgasanlage für eine Brennkraftmaschine mit einem Abgasheizer;
- Fig. 2: eine Längsschnittansicht des in Fig. 1 dargestellten Teils einer Abgasanlage, geschnitten längs einer Linie II-II in Fig. 3;
- Fig. 3: eine Axialansicht des in Fig. 1 dargestellten Teils einer Axialanlage;
- Fig. 4: einen Heizleiter des in den Fig. 1 bis 3 gezeigten Abgasheizers;
- Fig. 5: einen Träger des in den Fig. 1 bis 3 gezeigten Abgasheizers;
- Fig. 6: eine der Fig. 1 entsprechende Darstellung eines Teils einer Abgasanlage mit einer alternativen Ausgestaltungsart eines Abgasheizers;
- Fig. 7: den Abgasheizer der Fig. 6 in perspektivischer Ansicht;
- Fig. 8: die bei dem Abgasheizer der Fig. 7 eingesetzten Halteelemente;
- Fig. 9: eine weitere der Fig. 1 entsprechende Darstellung mit einer alternativen Ausgestaltungsart eines Abgasheizers;
- Fig. 10: einen Heizleiter des Abgasheizers der Fig. 9;
- Fig. 11: einen vergrößerten Bereich des Heizleiters mit einen Heizabschnitt desselben umgebenden Isolierelementen;
- Fig. 12: eine alternative nicht erfindungsgemäße Ausgestaltungsart eines nicht elektrisch isolierten Heizleiters in perspektivischer Ansicht;
- Fig. 13: eine Längsschnittansicht des Heizleiters der Fig. 12.

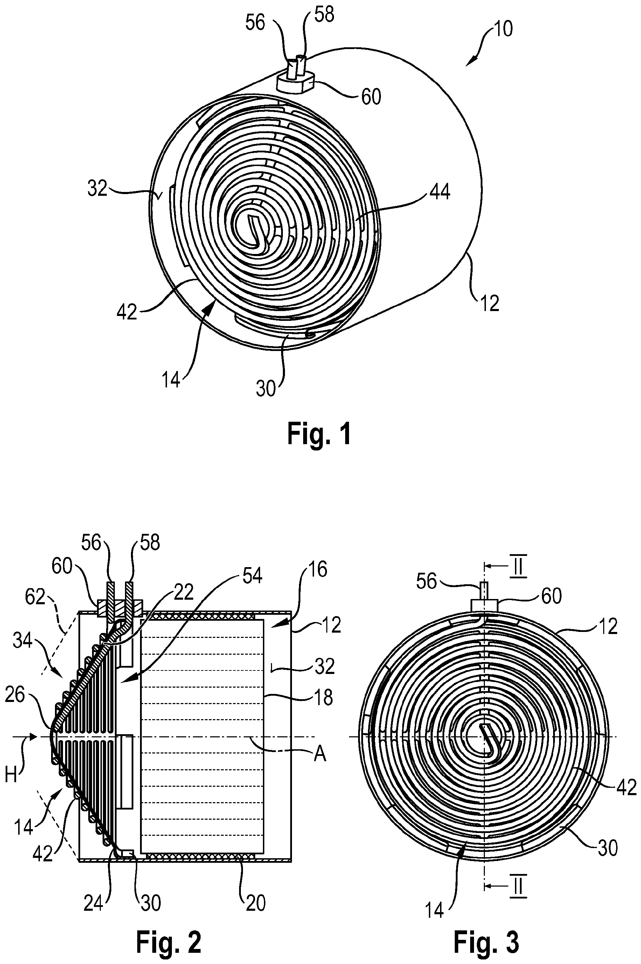

In den Fig. 1 bis 3 ist ein Abschnitt einer allgemein mit 10 bezeichneten Abgasanlage einer Brennkraftmaschine insbesondere in einem Fahrzeug dargestellt. Die Abgasanlage 10 umfasst eine beispielsweise als Abgasrohr ausgebildete Abgasführungskomponente 12, in welcher in dem dargestellten Längenbereich ein Abgasheizer 14 und in einer Abgashauptströmungsrichtung H stromabwärts bezüglich des Abgasheizers 14 eine ein Beispiel einer Abgasbehandlungseinheit repräsentierende Katalysatoreinheit 16 angeordnet sind. Die Katalysatoreinheit 16 kann einen mit katalytisch wirksamem Material beschichteten Katalysatorblock 18 umfassen, der beispielsweise durch eine Fasermatte 20 oder dergleichen stabil in der Abgasführungskomponente 12 gehalten ist.

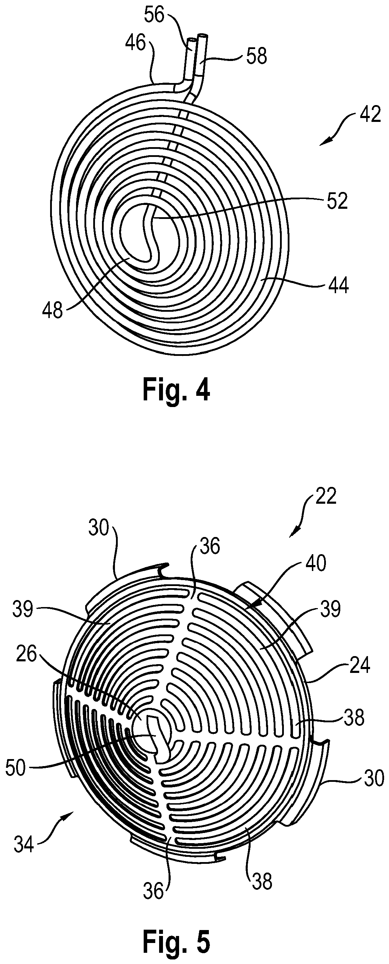

Der Abgasheizer 14 umfasst einen in Fig. 5 dargestellten und beispielsweise als Blechumformteil ausgebildeten Träger 22. Der Träger 22 weist einen bezüglich einer Heizer-Längsachse A radial außen liegenden Außenumfangsbereich 24 und einen bezüglich der Heizer-Längsachse A zentriert liegenden Zentralbereich 26 auf. Zwischen dem Außenumfangsbereich 24 und dem Zentralbereich 26 erstreckt sich ein allgemein mit 28 bezeichneter Tragebereich des Trägers 22. Dieser Tragebereich 28 weist eine im Wesentlichen konische bzw. kegelartige oder trichterartige Formgebung auf, so dass der Außenumfangsbereich 24 und der Zentralbereich 26 in Richtung der Heizer-Längsachse A zueinander axial versetzt liegen. Die konische Formgebung des Tragebereichs 28 kann, wie Fig. 2 dies veranschaulicht, mit einer im Wesentlichen geradlinig und ungekrümmt ausgebildeten Erstreckung des Tragebereichs 28 zwischen dem Außenumfangsbereich 24 und dem Zentralbereich 26 bereitgestellt sein. Im Sinne der vorliegenden Erfindung kann diese konische Struktur des Tragebereichs 28 aber auch mit einem gekrümmten, beispielsweise wenigstens bereichsweise konvex oder wenigstens bereichsweise konkav bezüglich der Abgashauptströmungsrichtung H gekrümmten Verlauf des Tragebereichs 28 bereitgestellt sein.

Im radial äußeren Bereich des Trägers 22 weist dieser vom Außenumfangsbereich 24 ausgehend eine Mehrzahl von Befestigungsabschnitten 30 auf. Diese sind axial abgebogen und liegen an einer Innenumfangsfläche 32 der Abgasführungskomponente 12 an und sind daran beispielsweise durch Verschweißung oder Verlötung festgelegt. In dem in den Fig. 1 bis 5 dargestellten Ausgestaltungsbeispiel sind die Befestigungsabschnitte 30 axial in Richtung von einer ersten axialen Seite 34 des Trägers 22 bzw. des Tragebereichs 28 desselben weg abgebogen. In Fig. 2 ist zu erkennen, dass diese erste axiale Seite 34 des Trägers 22 in Richtung stromaufwärts, also dem auf den Abgasheizer zu strömenden Abgasstrom zu gewandt orientiert angeordnet ist.

Die Fig. 5 zeigt ferner, dass in dem dargestellten Ausgestaltungsbeispiel des Trägers 22 insgesamt vier Verbindungsstege 36 den beispielsweise ringartig ausgebildeten Außenumfangsbereich 24 mit dem in Richtung der ersten axialen Seite 34 des Trägers 22, also in Richtung stromaufwärts vorzugsweise konvex gewölbt ausgebildeten Zentralbereich 26 verbindenden. Jeder der vier Verbindungsstege 36 kann sich dabei näherungsweise geradlinig von radial außen nach radial innen erstrecken.

In Umfangsrichtung zwischen zwei jeweils einander unmittelbar benachbarten Verbindungsstegen 36 sind radial gestaffelt mehrere jeweils durch näherungsweise in Umfangsrichtung sich zwischen zwei Verbindungsstegen erstreckendeckende Umfangsstege 39 getrennte Durchströmöffnungen 38 gebildet. Im dargestellten Ausgestaltungsbeispiel sind die Durchströmöffnungen 38 nach Art von Ringsegmenten ausgebildet, und in Umfangsrichtung aufeinander folgende Durchströmöffnungen 38 bilden jeweils eine Öffnungs-Ringstruktur 40. Man erkennt in Fig. 4, dass eine Mehrzahl derartiger Öffnungs-Ringstrukturen 40 radial gestaffelt und bezüglich der Heizer-Längsachse A vorzugsweise konzentrisch vorgesehen ist.

Der Abgasheizer 14 umfasst ferner einen in Fig. 4 detaillierter dargestellten Heizleiter 42. Der Heizleiter 42 weist einen an der ersten axialen Seite 34 des Trägers 12 bzw. des Tragebereichs 28 desselben angeordneten Heizabschnitt 44 auf. In diesem Heizabschnitt 44 erstreckt der Heizleiter 42 sich, ausgehend von einem im Bereich des Außenumfangsbereichs 24 des Trägers 22 positionierten radial äußeren Endabschnitt 46 zu einem im Bereich des Zentralbereichs 26 liegenden radial inneren Endabschnitt 48 mit spiralartig gewundener Struktur. Angepasst an die axial ausgedehnte Struktur des Trägers 22 ist auch der Heizabschnitt 44 axial ausgedehnt, so dass der radial äußeren Endabschnitt 46 und der radial innere Endabschnitt 48 zueinander axial versetzt liegen und somit der Heizabschnitt 44 eine an die konische Struktur des Tragebereichs 28 angepasste konische Struktur seiner Windungen aufweist.

Mit seinem Heizabschnitt 44 liegt der Heizleiter 42 an der ersten axialen Seite 34 des Trägers 22 im Bereich des Tragebereichs 28 an und ist daran in nachfolgend noch beschriebener Art und Weise festgelegt. Im Bereich des Zentralbereichs 26 des Trägers 22 ist eine für den Durchtritt des Heizleiters 42 vorgesehene Öffnung 50 ausgebildet, durch welche hindurch der Heizleiter 42 in einem Bereich, in welchem der Heizabschnitt 44 im Bereich des radial inneren Endabschnitts 48 in einen Verbindungsabschnitt 52 übergeht, geführt ist. Der Verbindungsabschnitt 52 erstreckt sich vom radial inneren Endabschnitt 48 entlang eines der Verbindungsstege 36 an einer zweiten axialen Seite 54 des Trägers 22 nach radial außen, so dass ein an den radial äußeren Endabschnitt 46 anschließender erster Anschlussabschnitt 56 und ein an den Verbindungsabschnitt 52 anschließender zweiter Anschlussabschnitt 58 radial außen bezüglich des Heizabschnitts 44 positioniert sind und im Bereich eines Isolierelements 60 durch die Abgasführungskomponente 12 hindurchgeführt sind.

Aufgrund des spiralartigen Verlaufs des Heizabschnitts 44 und der Ausgestaltung der Durchströmöffnungen 38, welche die radial gestaffelten Öffnungs-Ringstrukturen 40 bereitstellen, ergibt sich ein in der Axialansicht der Fig. 3 erkennbarer Verlauf des Heizabschnitts 44 bezüglich dieser Öffnungs-Ringstrukturen 40. Es existieren Bereiche, in welchen bei Betrachtung in Richtung der Heizer-Längsachse A, ebenso wie bei Betrachtung in Richtung orthogonal zu einer an der ersten axialen Seite 34 liegenden Oberfläche des Tragebereichs 28, in welchen der Heizabschnitt 44 die Durchströmöffnungen 38 überdeckt, somit also nicht in Kontakt mit dem Tragebereich 28 ist, und Bereiche, in welchen der Heizabschnitt 44 die Durchströmöffnungen 38 nicht überdeckt, dabei aber in Kontakt mit dem Tragebereich 28 des Trägers 22 ist. Somit wird einerseits der Strömungswiderstand für das in der Abgas-Hauptströmungsrichtung H auf den Abgasheizer 14 zu strömende Abgas nicht übermäßig erhöht, andererseits wird ein übermäßig starker Kontakt zwischen dem Heizleiter 42 und dem Träger 22 und somit ein übermäßiger Wärmeeintrag in den Träger 22 vermieden. Da der Verbindungsabschnitt 52 sich an der zweiten axialen Seite 54 entlang eines der Verbindungsstege 36 nach radial außen erstreckt, beeinträchtigt dieser die Durchströmbarkeit des Abgasheizers im Wesentlichen nicht.

Um in den Bereichen, in welchen der Heizleiter 52 in direktem Kontakt mit dem vorzugsweise als Blechumformteil bereitgestellten Träger 22 ist, das Entstehen eines elektrischen Kurzschlusses zu vermeiden, ist der Heizleiter 52 in dem in den Fig. 1 bis 5 dargestellten Ausgestaltungsbeispiel im Wesentlichen in seinem gesamten Längenbereich zwischen den beiden Anschlussabschnitten 56, 58 elektrisch isoliert.

Durch die axial ausgedehnte, konische bzw. kegelartige Formgebung des Abgasheizers 14 wird bei kompakter Bauart eine vergleichsweise große Erstreckungslänge des Heizleiters 42 im Abgasstrom ermöglicht, so dass dieser eine größere Heizleistung bereitstellen kann und somit eine effiziente Erwärmung des auf die Katalysatoreinheit 16 zu strömenden Abgasstroms erreicht wird. Dies stellt sicher, dass auch in Betriebsphasen, wie z. B. einem Kaltstart, eine schnelle Erwärmung des katalytisch wirksamen Materials erreicht wird, so dass die Zeitdauer, bis zu welcher die Katalysatoreinheit aufgrund zu niedriger Temperatur nicht katalytisch wirksam sein kann, verkürzt wird. Gleichzeitig stellt die axial ausgedehnte, konische Struktur des Trägers 22 einen Aufbau bereit, bei welchem insbesondere in Richtung der Heizer-Längsachse A der Abgasheizer 14 eine höhere Steifigkeit aufweist. Die im Betrieb einer Brennkraftmaschine auftretenden und unvermeidbar auch auf die Abgasanlage 10 übertragenen Vibrationen können somit aufgrund der erhöhten Eigenfrequenz des Trägers 22 im Wesentlichen nicht zu Schwingungsanregungen führen, welche über die Betriebslebensdauer hinweg zu einer Ermüdung und einer Schädigung des Trägers 22 führen könnten. Die axial ausgedehnte, von radial außen nach radial innen sich in Richtung stromaufwärts verjüngende Struktur des Abgasheizers 14 ermöglicht ferner eine derartige Positionierung des Abgasheizers 14 in der Abgasführungskomponente 12, dass der Abgasheizer 14 bereichsweise in Richtung stromaufwärts aus der Abgasführungskomponente 12 hervorsteht und in einen Innenraum eingreift, der durch eine an die Abgasführungskomponente 12 am stromaufwärtigen Ende derselben anschließende weitere Abgasführungskomponente 62 mit gleichermaßen konischer Struktur bereitgestellt ist. Ein gegenseitiger Kontakt bzw. eine übermäßige Einschnürung des Strömungsquerschnitts wird somit auch im Bereich dieser weiteren Abgasführungskomponente 62 nicht erzeugt.

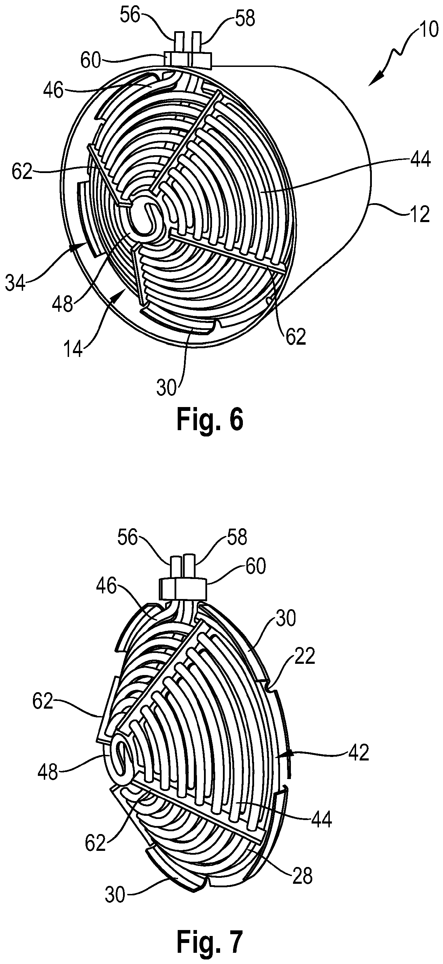

Eine alternative Ausgestaltungsform des Abgasheizers 14 ist in den Fig. 6 bis 8 gezeigt. In den Fig. 6 und 7 ist deutlich zu erkennen, dass der Träger 22 dieses Abgasheizers 14 in seinem radial äußeren Bereich so ausgebildet ist, dass die Befestigungsabschnitte 30 sich axial in Richtung zur ersten axialen Seite 34 des Trägers 22, also in Richtung stromaufwärts erstrecken. Dies führt dazu, dass die Befestigungsabschnitte 30 sich in axialer Richtung mit dem Tragebereich 28 des Trägers 22 überlappen, was zu einer kürzeren axialen Bauart führt und ein Positionieren des Abgasheizers 14 näher an der Katalysatoreinheit 18 ermöglicht.

Die Fig. 6 bis 8 zeigen auch, in welcher Art und Weise der Heizleiter 42 insbesondere im Bereich seines Heizabschnitts 44 am Träger 22 festgelegt werden kann. Hierzu können mehrere kammartige Halteelemente 62 vorgesehen sein, wobei beispielsweise in Zuordnung zu jedem Verbindungssteg 36 des Trägers 22 ein derartiges Halteelement 62 vorgesehen sein kann.

Die Halteelemente 62 übergreifen den Heizabschnitt 44 des Heizleiters 32 in seinen im Bereich der Verbindungsstege 36 sich erstreckenden Abschnitten und sind beispielsweise in ihren radial äußeren und radial inneren Endbereichen oder/und den zwischen jeweilige Windungen des Heizabschnitts 44 eingreifenden Bereichen am Träger 22 beispielsweise durch Verschweißung oder Verlötung festgelegt.

Es ist darauf hinzuweisen, dass selbstverständlich auch bei der in den Fig. 1 bis 5 dargestellten Ausgestaltungsform der Heizleiter 32 mit seinem an der ersten axialen Seite 34 des Trägers 22 anliegenden Heizabschnitt unter Einsatz derartiger Halteelemente 62 am Träger 22 festgelegt werden kann.

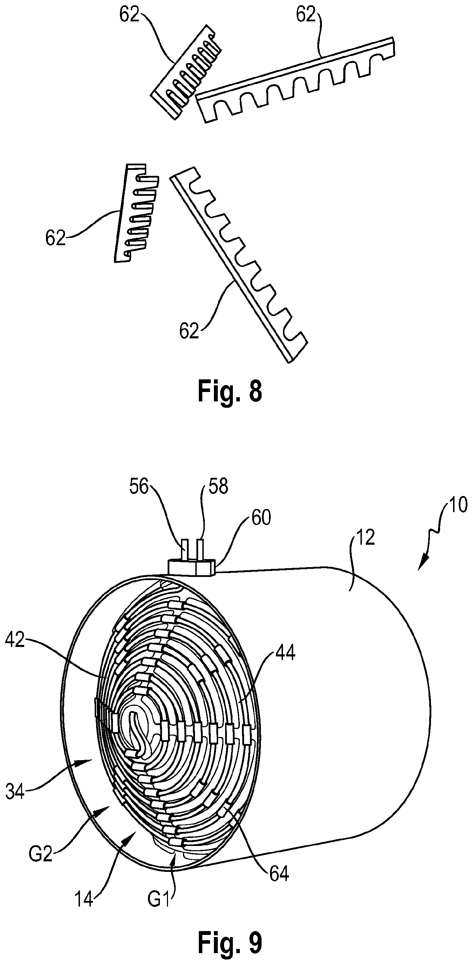

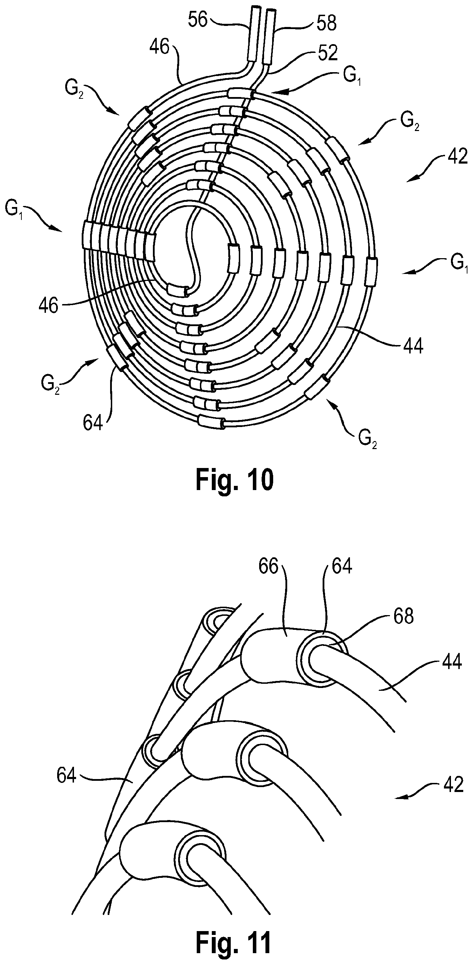

Eine weitere alternative Ausgestaltung des Abgasheizers 14 ist in den Fig. 9 bis 11 dargestellt. Bei dieser Ausgestaltungsform ist der Heizleiter 42 im Wesentlichen in seinem gesamten zwischen den Anschlussabschnitten 56, 58 sich erstreckenden Längenbereich nicht elektrisch isoliert. Dies gewährleistet eine bessere thermische Wechselwirkung des Heizleiters 42 mit dem diesen umströmenden Abgas. Um gleichwohl den Heizleiter 42 stabil, beispielsweise unter Einsatz der in Fig. 8 erkennbaren Halteelemente 42, am Träger 22, der so wie vorangehend beschrieben aufgebaut sein kann, haltern zu können, sind in Zuordnung zu den beispielsweise in Fig. 5 erkennbaren Verbindungsstegen 36 erste Gruppen G₁ von Isolierelementen 64 den Heizleiter 42 umgebend angeordnet. Wie die Fig. 10 und 11 dies deutlich zeigen, sind die Isolierelemente 64 der vier ersten Gruppen G₁ so bezüglich einander jeweilige Abschnitte des Heizabschnitts 44 des Heizleiters 42 umgebend angeordnet, dass die ersten Gruppen G₁ sich von radial außen nach radial innen entlang einer dem Erstreckungsverlauf der Verbindungsstege 36 erstreckenden Linie erstrecken. Somit wird ein direkter körperlicher Kontakt des Heizleiters 42 mit dem aus Metallmaterial aufgebauten Träger 22 vermieden. Zur Festlegung an den Verbindungsstegen 36 können die in Fig. 7 dargestellten Halteelemente 62 die Isolierelemente 64 der ersten Gruppen G₁ von Isolierelementen übergreifend angeordnet und an den Verbindungsstegen 36 materialschlüssig festgelegt werden.

In Umfangsrichtung zwischen jeweils zwei einander unmittelbar benachbarten ersten Gruppen G₁ von Verbindungselementen 64, sind zweite Gruppen G₂ von Verbindungselementen 64 vorgesehen. Auch in den zweiten Gruppen G₂ sind die Verbindungselemente 64 von radial außen nach radial innen sich linienartig erstreckend angeordnet. Auch in diesen Bereichen könnten ähnliche Halteelemente, wie diese in Fig. 8 gezeigt sind, eingesetzt werden. Grundsätzlich können die Isolierelemente 64 der zweiten Gruppen G₂ auch lediglich dazu dienen, eine axiale Abstützung des Heizabschnitts 44 bezüglich des Trägers 22 zu gewährleisten, so dass auch im Betrieb einer Brennkraftmaschine entstehende Vibrationen, die auf den Abgasheizer übertragen werden, nicht dazu führen können, dass ein ungewollter Kontakt zwischen den nicht elektrisch isolierten Heizleiter 42 und dem Träger 22 entsteht.

Die Isolierelemente 64 der ersten Gruppen G₁ und der zweiten Gruppen G₂ können beispielsweise einen mit Metallmaterial, beispielsweise Edelstahl oder dergleichen, aufgebauten Mantel 66 umfassen, dessen vom Heizleiter 42 durchsetzter Innenraum mit elektrisch isolierendem Material 68, wie z. B. Magnesiumoxid, thermisch beständigem und gegen Abgas resistentem Kunststoffmaterial oder dergleichen gefüllt sein kann.

Es ist darauf hinzuweisen, dass der vorangehend mit Bezug auf die Fig. 1 bis 11 detailliert beschriebene Abgasheizer in verschiedensten Aspekten variiert werden kann. So kann beispielsweise der Träger eine andere Anzahl an den Zentralbereich mit dem Außenumfangsbereich verbindenden Verbindungsstegen aufweisen, und die Verbindungsstege können eine von der geradlinigen Erstreckung abweichende, beispielsweise gekrümmte Erstreckung aufweisen. Auch die Anzahl der zwischen den Verbindungsstegen gebildeten Durchströmöffnungen kann anders gewählt werden, als in den Figuren dargestellt.

Insbesondere können die Durchströmöffnungen auch so gestaltet werden, dass in Umfangsrichtung aufeinanderfolgende Durchströmöffnungen nicht zueinander konzentrisch angeordnete Öffnungs-Ringstrukturen bilden, sondern eine Öffnungs-Spiralstruktur bilden. Eine derartige Öffnungs-Spiralstruktur kann in ihrem Verlauf an den spiralartigen Verlauf des Heizabschnitts angepasst sein, so dass beispielsweise eine derartige Positionierung des Heizabschnitts bezüglich dieser Öffnungs-Spiralstruktur vorgegeben werden kann, dass der Heizabschnitt 44 beispielsweise bei Betrachtung in axialer Richtung oder bei Betrachtung orthogonal zu einer Außenoberfläche des Tragebereichs des Trägers die Öffnungs-Spiralstruktur im Wesentlichen überdeckt und daher nahezu keinen direkten Kontakt mit dem Träger aufweist, so dass der Wärmeeintrag vom Heizleiter in den Träger minimiert werden kann. Bei einer alternativen Ausgestaltung kann vorgesehen sein, dass der Heizabschnitt mit seiner Spiralstruktur die Öffnungs-Spiralstruktur im Wesentlichen nicht überdeckend angeordnet ist, so dass die Öffnungs-Spiralstruktur eine gute Durchströmbarkeit für das Abgas aufweist, während der Heizleiter mit seinem spiralartigen Heizabschnitt dann in einem größeren Längenbereich eine verstärkte thermische Wechselwirkung mit dem Träger aufweist. Auch hier kann eine ausgewogene Struktur dadurch gewählt werden, dass die Überdeckung der Durchströmöffnungen bzw. des Tragebereichs des Trägers durch den Heizabschnitt so gewählt ist, dass einerseits eine gute Durchströmbarkeit für das in Richtung zur Katalysatoreinheit strömende Abgas gewährleistet ist, andererseits auch ein übermäßiger Wärmeeintrag in den Träger vermieden wird.

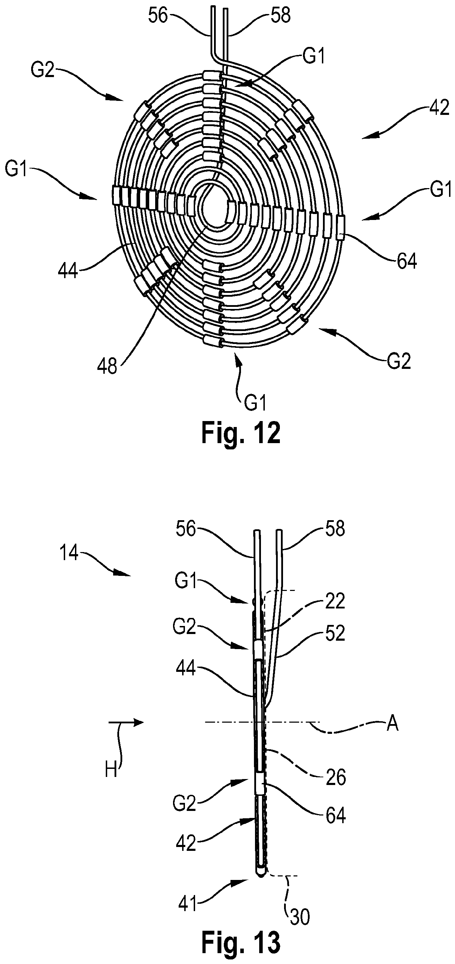

Eine alternative nicht erfindungsgemäße Ausgestaltungsart des Heizleiters 42 ist in den Fig. 12 und 13 dargestellt. Der Heizleiter 42 und der Träger 22 entsprechen dabei beispielsweise hinsichtlich der spiralartig gewundenen Struktur des Heizabschnitts 44 des Heizleiters 42 und auch der Ausgestaltung des Zentralbereichs 26 des Trägers 22 mit den Verbindungsstegen 36 und den dazwischen gebildeten Durchströmöffnungen 38 und den mit diesen gebildeten Öffnungs-Ringstrukturen 40 bzw. der alternativ gebildeten Öffnung-Spiralstruktur dem vorangehend beschriebenen Aufbau, so dass auf die voranstehenden Ausführungen verwiesen werden kann.

Der auch in der Ausgestaltungsform der Fig. 12 und 13 im Wesentlichen nicht elektrisch isolierte Heizleiter 42 ist jedoch nicht axial ausgedehnt, so dass der radial äußere Endabschnitt 46 des Heizabschnitts 44 und der radial innere Endabschnitt 48 des Heizabschnitts 44 beispielsweise im Wesentlichen in einer zur Heizer-Längsachse A orthogonalen Ebene liegen und auch die Spiralstruktur des Heizabschnitts 44 unabhängig davon, dass selbstverständlich der Heizabschnitts 44 eine axiale Ausdehnung hat, beispielsweise in der zur Heizer-Längsachse A orthogonalen Ebene liegt. An der in Richtung stromabwärts orientierten Seite des Heizleiters 42 bzw. des Heizabschnitts 44 desselben ist der ebenfalls im Wesentlichen eben ausgebildete Zentralbereich 26 des Trägers 22 angeordnet. Der Heizleiter 42 liegt mit den den Heizabschnitts 44 bereichsweise umgebenden Isolierelementen 64, die beispielsweise wieder in den ersten Gruppen G₁ und zweiten Gruppen G₂ angeordnet sein können, am Zentralbereich 26 an, wobei die Anordnung beispielsweise wieder derart sein kann, dass die ersten Gruppen G₁ von Isolierelementen 64 sich entlang eines jeweiligen Verbindungsstegs des Trägers 22 erstrecken können. Zur Festlegung des Heizleiters 42 am Träger 22 können beispielsweise wieder die in den Figuren 6-8 dargestellten, kammartigen Halteelemente 62 eingesetzt werden, die mit ihren Stegen zwischen radial gestaffelte Windungsabschnitte des Heizabschnitts 44 eingreifend am Zentralbereich 26 des Trägers 22 festgelegt sein können.

Auch bei dieser Ausgestaltungsform ergibt sich bei kompakter axialer Bauart aufgrund der im Wesentlichen nicht vorhandenen elektrischen Isolierung des Heizleiters 42 im Bereich seines Heizabschnitts 44 der Vorteil einer sehr effizienten thermischen Wechselwirkung des Heizleiters 42 mit dem diesen umströmenden Abgas, wobei auch bei dieser Ausgestaltung für eine derartige gute thermische Wechselwirkung vorteilhafterweise vorgesehen ist, dass der Heizleiter 42 mit seinem Heizabschnitt 44 an der in Richtung stromaufwärts orientierten Seite des Zentralbereichs 26 des Trägers 22 angeordnet ist und an seiner in Richtung stromaufwärts orientierten Seite nicht durch Bereiche des Trägers 22 überdeckt bzw. gegen die Anströmung mit Abgas abgeschirmt ist.

## Patentansprüche

1. Abgasheizer für eine Abgasanlage einer Brennkraftmaschine, umfassend:
- einen Träger (22) mit einem bezüglich einer Heizer-Längsachse (A) radial außen angeordneten Außenumfangsbereich (24) und einem Zentralbereich (26),
- einen an dem Träger (22) getragenen Heizleiter (42),
wobei der Heizleiter (42) einen an einer ersten axialen Seite (34) des Trägers (22) angeordneten, spiralartig gewundenen Heizabschnitt (44) umfasst, wobei der Zentralbereich (26) bezüglich des Außenumfangsbereichs (24) in Richtung der ersten axialen Seite (34) des Trägers (22) axial versetzt angeordnet ist derart, dass ein im Bereich des Außenumfangsbereichs (24) des Trägers (22) liegender radial äußerer Endabschnitt (46) des Heizabschnitts (44) und ein im Bereich des Zentralbereichs (26) des Trägers (22) liegender radial innerer Endabschnitt (48) des Heizabschnitts (44) zueinander axial versetzt angeordnet sind,
**dadurch gekennzeichnet, dass** der Träger (22) eine Mehrzahl von mit Umfangsabstand zueinander angeordneten und den Zentralbereich (26) mit dem Außenumfangsbereich (24) verbindenden Verbindungsstegen (36) umfasst, wobei zwischen in Umfangsrichtung einander unmittelbar benachbarten Verbindungsstegen (36) Durchströmöffnungen (38) gebildet sind.

2. Abgasheizer nach Anspruch 1, **dadurch gekennzeichnet,**
**dass** der Träger (22) einen zwischen dem Außenumfangsbereich (24) und dem Zentralbereich (26) sich erstreckenden und im Wesentlichen den Heizabschnitt (44) tragenden Tragebereich (28) umfasst, und dass der Tragebereich (28) eine konische Form aufweist,
oder/und
**dass** der Zentralbereich (26) in Richtung der ersten axialen Seite (34) konvex ausgewölbt ist.

3. Abgasheizer nach einem der vorangehenden Ansprüche, **dadurch gekennzeichnet,**
**dass** der Träger (22) als Metallbauteil, vorzugsweise Blechformteil, ausgebildet ist,
oder/und
**dass** der Heizleiter (44) in seinem den Träger (22) überdeckenden Längenbereich elektrisch isoliert ist.

4. Abgasheizer nach einem der Ansprüche 1-3, **dadurch gekennzeichnet**
**dass** der Heizleiter (42) in seinem den Träger (22) überdeckenden Längenbereich im Wesentlichen nicht elektrisch isoliert ist, und dass an dem Heizleiter (42) eine Mehrzahl von diesen umgebenden und an dem Träger (22) festgelegten oder/und sich abstützenden Isolierelementen (64) vorgesehen ist.

5. Abgasheizer nach Anspruch 1, **dadurch gekennzeichnet,**
**dass** in Umfangsrichtung aufeinander folgende Durchströmöffnungen (38) eine Mehrzahl von radial gestaffelt angeordneten Öffnungs-Ringstrukturen (40) bereitstellen,
oder
**dass** in Umfangsrichtung aufeinanderfolgende Durchströmöffnungen eine Öffnungs-Spiralstruktur bereitstellen.

6. Abgasheizer nach Anspruch 5, **dadurch gekennzeichnet,**
**dass** ein spiralartiger Verlauf der Öffnungs-Spiralstruktur im Wesentlichen einem spiralartigen Verlauf des Heizabschnitts (44) entspricht, und dass der Heizabschnitt (44) bezüglich der Öffnungs-Spiralstruktur derart angeordnet ist, dass der Heizabschnitt (44) die Durchströmöffnungen der Öffnungs-Spiralstruktur im Wesentlichen überdeckend angeordnet ist,
oder
**dass** ein spiralartiger Verlauf der Öffnungs-Spiralstruktur im Wesentlichen einem spiralartigen Verlauf des Heizabschnitts (44) entspricht, und dass der Heizabschnitt (44) bezüglich der Öffnungs-Spiralstruktur derart angeordnet ist, dass der Heizabschnitt (44) die Durchströmöffnungen der Öffnungs-Spiralstruktur im Wesentlichen nicht überdeckend angeordnet ist.

7. Abgasheizer nach einem der Ansprüche 1-6, **dadurch gekennzeichnet, dass** der Heizleiter (42) einen an den radial inneren Endabschnitt (48) des Heizabschnitts (44) anschließenden Verbindungsabschnitt (52) umfasst, wobei der Verbindungsabschnitt (52) an einer zweiten axialen Seite (54) des Trägers (22) von radial innen nach radial außen entlang eines Verbindungsstegs (36) geführt ist.

8. Abgasheizer nach Anspruch 4 und einem der Ansprüche 2, 3 oder 5-7, **dadurch gekennzeichnet, dass** im Bereich der Verbindungsstege (36) an dem Heizleiter (42) von radial außen nach radial innen verlaufend angeordnete erste Gruppen (G₁) von Isolierelementen (64) vorgesehen sind, wobei die Isolierelemente (64) der ersten Gruppen (G₁) von Isolierelementen (64) im Bereich der Verbindungsstege (36) sich erstreckende Abschnitte des Heizabschnitts (44) umgeben.

9. Abgasheizer nach Anspruch 8, **dadurch gekennzeichnet, dass** zwischen wenigstens zwei in Umfangsrichtung unmittelbar aufeinanderfolgenden ersten Gruppen (G₁) von Isolierelementen (64) wenigstens eine von radial außen nach radial innen verlaufend angeordnete zweite Gruppe (G₂) von Isolierelementen (64) vorgesehen ist, wobei die Isolierelemente (64) der zweiten Gruppe (G₂) von Isolierelementen (64) im Bereich zwischen zwei Verbindungsstegen (36) sich erstreckende Abschnitte des Heizabschnitts (44) umgeben.

10. Abgasheizer nach einem der vorangehenden Ansprüche, **dadurch gekennzeichnet, dass** der Heizabschnitt (44) durch eine Mehrzahl von diesen übergreifenden und am Träger festgelegten, vorzugsweise kammartigen Halteelementen (62) am Träger (22) gehalten ist.

11. Abgasheizer nach Anspruch 8 und Anspruch 10, **dadurch gekennzeichnet, dass** der Heizabschnitt (44) im Bereich wenigstens einer, vorzugsweise jeder ersten Gruppe (G₁) von Isolierelementen (64) vermittels eines Halteelements (62) am Träger (22) gehalten ist.

12. Abgasheizer nach einem der vorangehenden Ansprüche, **dadurch**
**gekennzeichnet, dass** am Außenumfangsbereich (24) des Trägers (22) eine Mehrzahl von in axialer Richtung abgebogenen Befestigungsabschnitten (30) zur Festlegung des Trägers (22) an einer Abgasführungskomponente (12) vorgesehen ist,
vorzugsweise wobei wenigstens ein Teil der, vorzugsweise alle Befestigungsabschnitte (30) in Richtung zur ersten axialen Seite (34) abgebogen sind.

13. Abgasanlage, umfassend eine vorzugsweise rohrartige
Abgasführungskomponente (12) und einen in der Abgasführungskomponente (12) angeordneten Abgasheizer (14) nach einem der vorangehenden Ansprüche.

14. Abgasanlage nach Anspruch 13, **dadurch gekennzeichnet,**
**dass** der Abgasheizer (14) vorzugsweise mit seiner Heizer-Längsachse (A) sich im Wesentlichen in Richtung einer Abgas-Hauptströmungsrichtung (H) erstreckend derart in der Abgasführungskomponente (12) angeordnet ist, dass der Träger (22) mit seiner ersten axialen Seite (34) in Richtung stromaufwärts orientiert ist derart, dass der im Bereich des Zentralbereichs (26) des Trägers (22) liegende radial innere Endabschnitt (48) des Heizabschnitts (44) stromaufwärts bezüglich des im Bereich des Außenumfangsbereichs (24) des Trägers (22) liegenden radial äußeren Endabschnitt (46) des Heizabschnitts (44) positioniert ist oder/und dass der Heizabschnitt (44) an seiner in Richtung stromaufwärts orientierten Seite nicht durch den Träger (22) überdeckt ist.

15. Abgasanlage nach Anspruch 13 oder 14, **dadurch gekennzeichnet, dass** der Abgasheizer (14) stromaufwärts bezüglich einer in der Abgasführungskomponente (12) angeordneten Abgasbehandlungseinheit, vorzugsweise Katalysatoreinheit, angeordnet ist.

## Claims

1. Exhaust gas heater for an exhaust system of an internal combustion engine, comprising:
- a support (22) with an outer circumferential area (24) arranged radially on the outside in relation to a heater longitudinal axis (A) and with a central area (26) and
- a heating conductor (42) carried at the support (22),
wherein the heating conductor (42) comprises a spirally wound heating section (44) arranged on a first axial side (34) of the support (22), wherein the central area (26) is arranged axially offset in relation to the outer circumferential area (24) in the direction of the first axial side (34) of the support (22) such that a radially outer end section (46) of the heating section (44), which is located in the area of the outer circumferential area (24) of the support (22), and a radially inner end section (48) of the heating section (44), which is located in the area of the central area (26) of the support (22), are arranged axially offset in relation to one another,
**characterized in that** the support (22) comprises a plurality of connection webs (36), which are arranged at circumferentially spaced locations from one another and connect the central area (26) to the outer circumferential area (24), wherein flow openings (38) are formed between connection webs (36) located directly adjacent to one another in the circumferential direction.

2. Exhaust gas heater in accordance with claim 1, **characterized in that** the support (22) has a carrying area (28), which extends between the outer circumferential area (24) and the central area (26) and carries essentially the heating section (44), and that the carrying area (28) has a conical shape
and/or
that the central area (26) is arched convexly out in the direction of the first axial side (34).

3. Exhaust gas heater in accordance with one of the above claims, **characterized in that** the support (22) is configured as a metal component, preferably as a shaped sheet metal part,
and/or
that the heating conductor (44) is electrically insulated in its length area covering the support (22).

4. Exhaust gas heater in accordance with one of the claims 1-3, **characterized in that** the heating conductor (42) is not essentially insulated electrically in its length area covering the support (22) and that a plurality of insulating elements (64), which enclose the heating conductor (42) and are fixed or/and supported on the heating conductor (42), are provided at the heating conductor (42).

5. Exhaust gas heater in accordance with claim 1, **characterized in that** flow openings (38) following one another in the circumferential direction provide a plurality of opening ring structures (40) arranged in a radially staggered manner.
or
that flow openings following one another in the circumferential direction provide a spiral-shaped opening structure.

6. Exhaust gas heater in accordance with claim 5, **characterized in that** a spiral course of the spiral-shaped opening structure corresponds essentially to a spiral course of the heating section (44), and that the heating section (44) is arranged in relation to the spiral-shaped opening structure such that the heating section (44) is arranged such that it essentially covers the flow openings of the spiral-shaped opening structu re,
or
that a spiral course of the spiral-shaped opening structure corresponds essentially to a spiral course of the heating section (44), and that the heating section (44) is arranged in relation to the spiral-shaped opening structure such that the heating section (44) is arranged such that it does not essentially cover the spiral-shaped opening structure.

7. Exhaust gas heater in accordance with one of the claims 1-6, **characterized in that** the heating conductor (42) comprises a connection section (52) adjoining the radially inner end section (48) of the heating section (44), wherein the connection section (52) is led at a second axial side (54) of the support (22) along a connection web (36) from the radially inward direction to the radially outward direction.

8. Exhaust gas heater in accordance with claim 4 and in accordance with one of the claims 2, 3 or 5-7, **characterized in that** first groups (G₁) of insulating elements (64) arranged extending from the radially outward direction to the radially inward direction are provided at the heating conductor (42) in the area of the connection webs (36), wherein the insulating elements (64) of the first groups (G₁) of insulating elements (64) enclose sections of the heating section (44), which extend in the area of the connection webs (36).

9. Exhaust gas heater in accordance with claim 8, **characterized in that** at least one second group (G₂) of insulating elements (64) arranged extending from the radially outward direction to the radially inward direction is provided between at least two first groups (G₁) of insulating elements (64) following one another directly in the circumferential direction, wherein the insulating elements (64) of the second group (G₂) of insulating elements (64) enclose sections of the heating section (44), which extend in the area between two connection webs (36).

10. Exhaust gas heater in accordance with one of the above claims, **characterized in that** the heating section (44) is held at the support (22) by a plurality of preferably comb-like holding elements (62), which extend over this heating section and are fixed to the support.

11. Exhaust gas heater in accordance with claim 8 and claim 10, **characterized in that** the heating section (44) is held by means of a holding element (62) at the support (22) in the area of at least one and preferably each first group (G₁) of insulating elements (64).

12. Exhaust gas heater in accordance with one of the above claims, **characterized in that** a plurality of fastening sections (30) bent off in the axial direction are provided at the outer circumferential area (24) of the support (22) for fixing the support (22) to an exhaust gas-carrying component (12),
preferably wherein at least some and preferably all fastening sections (30) are bent off in the direction of the first axial side (34).

13. Exhaust system, comprising a preferably tubular exhaust gas-carrying component (12) and an exhaust gas heater (14) arranged in the exhaust gas-carrying component (12) in accordance with one of the above claims.

14. Exhaust system in accordance with claim 13, **characterized in that** the exhaust gas heater (14) is arranged in the exhaust gas-carrying component (12) preferably extending with its heater longitudinal axis (A) essentially in the direction of an exhaust gas main flow direction (H) such that the support (22) is oriented with its first axial side (34) in the upstream direction such that the radially inner end section (48) of the heating section (44), which is located in the area of the central area (26) of the support (22), is positioned upstream in relation to the radially outer end section (46) of the heating section (44), which said outer end section is located in the area of the outer circumferential area (24) of the support (22), or/and that the heating section (44) is not covered by the support (22) on its side oriented upstream.

15. Exhaust system in accordance with claim 13 or 14, **characterized in that** the exhaust gas heater (14) is arranged upstream in relation to an exhaust gas treatment unit, preferably catalytic converter unit, which is arranged in the exhaust gas-carrying component.

## Revendications

1. Chauffage de gaz d'échappement pour un système d'échappement d'un moteur à combustion interne, comprenant :
- un support (22) avec une zone circonférentielle extérieure (24) disposée radialement à l'extérieur par rapport à un axe longitudinal de chauffage (A) et avec une zone centrale (26), et
- un conducteur chauffant (42) porté par le support (22),
dans lequel le conducteur chauffant (42) comprend une section de chauffage (44) enroulée de manière en spirale et disposée sur un premier côté axial (34) du support (22), dans lequel la zone centrale (26) est disposée de manière décalée axialement par rapport à la zone circonférentielle extérieure (24) dans la direction du premier côté axial (34) du support (22) de telle sorte qu'une section d'extrémité radialement extérieure (46) de la section de chauffage (44), située dans la zone de la zone circonférentielle externe (24) du support (22), et une section d'extrémité radialement intérieure (48) de la section de chauffage (44), située dans la zone de la zone centrale (26) du support (22), sont disposées de manière axialement décalée l'une par rapport à l'autre,
**caractérisé en ce que** le support (22) comprend une pluralité d'entretoises de connexion (36) qui sont disposées à distance les unes des autres dans le sens de la circonférence et qui relient la zone centrale (26) à la zone circonférentielle extérieure (24), dans lequel des ouvertures d'écoulement (38) sont formées entre des entretoises de connexion (36) directement voisines dans le sens de la circonférence.

2. Chauffage de gaz d'échappement selon la revendication 1, **caractérisé en ce que** le support (22) comprend une zone de support (28) s'étendant entre la zone circonférentielle extérieure (24) et la zone centrale (26) et portant essentiellement la section de chauffage (44), et **en ce que** la zone de support (28) présente une forme conique
et/ou
que la zone centrale (26) est bombée de manière convexe en direction du premier côté axial (34).

3. Chauffage de gaz d'échappement selon l'une des revendications précédentes, **caractérisé en ce que** le support (22) est configuré comme un composant métallique, de préférence comme une pièce de tôle profilée.
et/ou
que le conducteur chauffant (44) est isolé électriquement dans sa zone longitudinale recouvrant le support (22).

4. Chauffage de gaz d'échappement selon l'une des revendications 1 à 3, **caractérisé en ce que** le conducteur chauffant (42) n'est pas essentiellement isolé électriquement dans sa zone longitudinale recouvrant le support (22) et **en ce qu'**il est prévu sur le conducteur chauffant (42) une pluralité d'éléments isolants (64) qui entourent le conducteur chauffant (42) et sont fixés ou/et appuyés sur le conducteur chauffant (42).

5. Chauffage de gaz d'échappement selon la revendication 1, **caractérisé en ce que** des ouvertures d'écoulement (38) se succédant dans la direction circonférentielle fournissent une pluralité de structures annulaires d'ouverture (40) disposées en quinconce radialement,
ou
que des ouvertures d'écoulement se succédant dans la direction circonférentielle forment une structure d'ouverture en spirale.

6. Chauffage de gaz d'échappement selon la revendication 5, **caractérisé en ce qu'**un parcours en spirale de la structure d'ouverture en spirale correspond essentiellement à un parcours en spirale de la section de chauffage (44), et **en ce que** la section de chauffage (44) est disposée par rapport à la structure d'ouverture en spirale de telle sorte que la section de chauffage (44) est disposée de telle sorte qu'elle recouvre essentiellement les ouvertures d'écoulement de la structure d'ouverture en spirale,
ou
qu'un parcours en spirale de la structure d'ouverture en spirale correspond essentiellement à un parcours en spirale de la section de chauffage (44), et que la section de chauffage (44) est disposée par rapport à la structure d'ouverture en spirale de telle sorte que la section de chauffage (44) est disposée de telle sorte qu'elle ne recouvre pas essentiellement la structure d'ouverture en spirale.

7. Chauffage de gaz d'échappement selon l'une des revendications 1-6, **caractérisé en ce que** le conducteur chauffant (42) comprend une section de raccordement (52) adjacente à la section d'extrémité radialement intérieure (48) de la section de chauffage (44), dans lequel la section de raccordement (52) est guidée sur un deuxième côté axial (54) du support (22) le long d'une entretoise de connexion (36) depuis la direction radialement intérieure vers la direction radialement extérieure.

8. Chauffage de gaz d'échappement selon la revendication 4 et selon l'une des revendications 2, 3 ou 5-7, **caractérisé en ce que** des premiers groupes (G₁) d'éléments isolants (64) disposés de manière à s'étendre de la direction radialement extérieure à la direction radialement intérieure sont prévus sur le conducteur chauffant (42) dans la zone des entretoises de connexion (36), dans lequel les éléments isolants (64) des premiers groupes (G₁) d'éléments isolants (64) entourent des sections de la section de chauffage (44) qui s'étendent dans la zone des entretoises de connexion (36).

9. Chauffage de gaz d'échappement selon la revendication 8, **caractérisé en ce qu'**au moins un deuxième groupe (G₂) d'éléments isolants (64) disposés de manière à s'étendre de la direction radiale vers l'extérieur à la direction radiale vers l'intérieur est prévu entre au moins deux premiers groupes (G₁) d'éléments isolants (64) se succédant directement dans la direction circonférentielle, les éléments isolants (64) du deuxième groupe (G₂) d'éléments isolants (64) entourant des sections de la section de chauffage (44) qui s'étendent dans la zone entre deux entretoises de connexion (36).

10. Chauffage de gaz d'échappement selon l'une des revendications précédentes, **caractérisé en ce que** la section de chauffage (44) est maintenue sur le support (22) par une pluralité d'éléments de maintien (62), de préférence en forme de peigne, qui s'étendent sur cette section de chauffage et sont fixés sur le support.

11. Chauffage de gaz d'échappement selon la revendication 8 et la revendication 10, **caractérisé en ce que** la section de chauffage (44) est maintenue au moyen d'un élément de maintien (62) sur le support (22) dans la zone d'au moins un et de préférence de chaque premier groupe (G₁) d'éléments isolants (64).

12. Chauffage de gaz d'échappement selon l'une des revendications précédentes, **caractérisé en ce qu'**une pluralité de sections de fixation (30) courbées dans la direction axiale sont prévues sur la zone circonférentielle extérieure (24) du support (22) pour fixer le support (22) sur un composant de transport de gaz d'échappement (12),
de préférence dans lequel au moins une partie et de préférence toutes les sections de fixation (30) sont courbées en direction du premier côté axial (34).

13. Système d'échappement, comprenant un composant de transport de gaz d'échappement (12) de préférence tubulaire et un chauffage de gaz d'échappement (14) disposé dans le composant de transport de gaz d'échappement (12) selon l'une des revendications précédentes.

14. Système d'échappement selon la revendication 13, **caractérisé en ce que** le chauffage de gaz d'échappement (14) est disposé dans le composant de transport de gaz d'échappement (12) s'étendant de préférence avec son axe longitudinal de chauffage (A) essentiellement dans la direction d'une direction d'écoulement principal de gaz d'échappement (H) de sorte que le support (22) est orienté avec son premier côté axial (34) dans la direction amont de sorte que la section d'extrémité radialement intérieure (48) de la section de chauffage (44), laquelle section d'extrémité intérieure est située dans la zone de la zone centrale (26) du support (22), soit positionnée en amont par rapport à la section d'extrémité radialement extérieure (46) de la section de chauffage (44), lequel est situé au niveau de la zone circonférentielle externe (24) du support (22), ou/et que la section de chauffage (44) n'est pas recouvert par le support (22) sur son côté orienté vers l'amont.

15. Système d'échappement selon la revendication 13 ou 14, **caractérisé en ce que** le chauffage de gaz d'échappement (14) est disposé en amont par rapport à une unité de traitement des gaz d'échappement, de préférence une unité de convertisseur catalytique, qui est disposée dans le composant de transport des gaz d'échappement (12).
